Europäisches Patentamt

European Patent Office

Office européen des brevets

(19)

(11) Publication number: **0 119 340**
**B1**

## EUROPEAN PATENT SPECIFICATION

(45) Date of publication of patent specification: **17.08.88**

(21) Application number: **83301551.4**

(22) Date of filing: **21.03.83**

(51) Int. Cl.⁴: **B 01 D 35/10, B 01 D 35/20, B 01 D 29/44, B 01 D 29/38**

(54) A filter element for filtering fluids.

(43) Date of publication of application:
**26.09.84 Bulletin 84/39**

(45) Publication of the grant of the patent:
**17.08.88 Bulletin 88/33**

(84) Designated Contracting States:
**AT BE CH DE FR GB IT LI NL SE**

(56) References cited:
**DE-A-1 959 867**
**DE-A-2 249 603**
**DE-C- 98 685**
**FR-A-2 461 513**
**GB-A-1 200 208**

(73) Proprietor: **Filtration Water Filters for Agriculture and Industry Ltd.**
**8 Galgalei Haplada Street P.O. Box 2068**
**Industrial Zone**
**Herzlia (IL)**

(72) Inventor: **Barzuza, Ytzhak**
**la Frankfurter St.**
**Petach Tikva (IL)**
Inventor: **Lerner, Boaz**
**50 Kibbutz Galuyot St.**
**Herzliya (IL)**

(74) Representative: **Knott, Stephen Gilbert et al**
**MATHISEN, MACARA & CO. The Coach House**
**6-8 Swakeleys Road**
**Ickenham Uxbridge Middlesex UB10 8BZ (GB)**

Courier Press, Leamington Spa, England.

## Description

The present invention relates to a filter element for filtering fluids and to a filter device incorporating said element.

A major proportion of all water sources today available require filtration prior to their use, not only for reasons of potability and palatability, but also because solid impurities, even when harmless from the health point of view, are liable to interfere with certain technical uses of water, for instance in agriculture, where aggregating solids such as sand and clay particles or algae are likely to disrupt the operation of, e.g., sprinklers and drip-irrigation devices, the latter being especially susceptible to particulate matter. Filtration devices used range from sand-bed to screen and fiber filters. Sand-bed filters, while relatively cheap, are bulky devices requiring frequent monitoring and are not easily cleaned, while screen filters, though much more compact, are costly and, when designed for self-cleaning, rather complex devices, the degree of complexity being reflected in increased failure-proneness. Fiber filters of the mat type, in which fibers are arranged in a three-dimensional random configuration, while having a high separation efficiency and being relatively inexpensive, are hardly usable for flushing applications since solids, once entrapped in the interstices of the filter, are very difficult to flush out again.

Fiber filters are also known in which the fibers are arranged in a layer wherein fibers are oriented substantially uniformly in a given direction over an active length thereof, each fiber being disposed in close proximity to its adjacent fibers, at least during the filtration operation. One example of such a filter is disclosed in DE—A—2249603, in which the filter comprises a tubular body member having an opening at one end and a series of perforations along a portion of its length, and the fiber layer is disposed around at least the perforated portion of this member with the fibers extending substantially parallel to its axis. The fibers are clamped at each end and, in some embodiments, are pulled tight during the filtration operation. However, when the filter layer is to be cleaned, the tension on the fibers is released so that the fibers separate from each other to facilitate removal of the collected solids by a conventional back flushing operation.

This filter has a high theoretical separation efficiency, but in practice this gradually declines because the back flushing cleaning method is not sufficiently thorough. In particular, it is not very good at dislodging deposits which adhere to the individual fibers.

In another example of a fiber filter which is disclosed in FR—A—2461513, the filter comprises several separate layers of fibers arranged to be clamped together across one end of a hollow filter body connected so as to draw the fluid to be filtered through the filter layers. For cleaning purposes, the layers are moved apart from each other and are each subjected to mechanical agitation, both horizontally and vertically. In addition water can be sprayed at the fiber layers in the opposite direction to the normal filtering flow, and further cleaning action can be provided by compressed air and ultrasonic waves. As will be appreciated, this filter is extremely complex.

The aim of the present invention is to provide a filter of the fiber type which is reliable and inexpensive both to construct and operate, and which not only has the high separation efficiency characteristics of the above fiber filters but also has a high cleaning efficiency as well.

To this end, according to the invention, there is provided a filter element for filtering a fluid, comprising at least one body member having openings providing access and egress for said fluid, said access opening(s) being constituted by one or more perforations in at least one major wall element of the body member, a filter medium in the form of a plurality of fibers located on the body member over said wall element, the fibers having an active length and being oriented substantially uniformly in a given direction over at least a portion of their active length, along which portion at least, each of the fibers is disposed in close proximity to its adjacent fibers to form a filter layer, and means for directing fluid onto at least a portion of the active length of the fibers for cleaning the fibers, characterised in that the filter layer constituted by the plurality of fibers is substantially flat, that the fibers are maintained in a taut condition, and that the cleaning fluid directing means comprises means for directing at least one fluid jet onto the fibers in a direction intersecting the plane of the layer and towards the wall element so that said at least one fluid jet impacts the filter layer and presses it against the surface of the wall element.

With specific reference now to the Figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

Figure 1 is a cross-sectional view of a first embodiment of the filter element in accordance with the invention, in which the fluid jet cleaning means is not shown;

Figure 2 is a cross-sectional view of a variant of the filter element of Figure 1, in which the fibers in the flat filter layer are kept tight by a mechanical device;

Figure 3 is a cross-sectional view of a variant of the filter element of Figure 2, in which the filter fibers are kept tight and pressed against the filter body by the mechanical device;

Figure 4 is a cross-sectional view of a variant of the filter element of Figure 1, illustrating a method of facilitating the cleaning of the fiber layer;

Figure 5 is a schematic representation to a larger scale, of a detail of Figure 4;

Figure 6 is a schematic representation of the fiber strata arrangement in a variant of the embodiment of Figure 4;

Figure 7 is a cross-sectional view similar to Figure 4 illustrating another method of facilitating the cleaning of the fiber layer; and

Figure 8 is a partial cross-sectional view illustrating an example of the fluid jet cleaning means of filter elements in accordance with the invention.

Referring now to the drawings, it should be noted that the filter-element component that carries or accommodates the filter fibers and, in the following, is called "filter body" or "body member" is referred to in the appended set of claims as "body member".

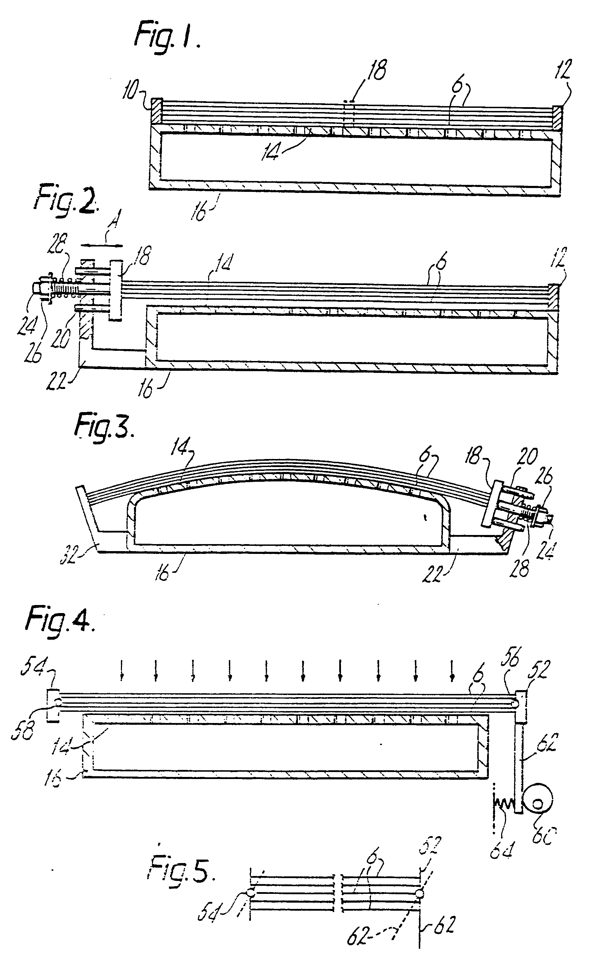

The filter element shown in Figure 1 has a flat filter body 16 in the form of a substantially rectangular box and a layer of fibers 6 stretched between two rails 10, 12 over and substantially touching the perforated top surface 14 of the filter body 16. The fibers 6 are all of the same orientation, and, in their totality, constitute a substantial layer on the filter body 16. Such a layer is advantageously formed by several "sublayers" or "strata" of the fibers 6, and it has been found that for the filter to be fully effective, at least three of such strata are required.

To function properly, the fibers 6 must be taut and close together. Figure 2 shows an arrangement whereby such tightening can be carried out. One of the fibers 6 constituting the filter layer is fixedly attached to the rail 12, which is stationary. The other end is attached to a rail 18 which, guided by pins 20 slidably mounted in a bracket 22, can move in the direction of the double arrow A. Also attached to the rail 18 is a bolt 24 having a nut 26 by means of which, against the elastic force of a compression spring 28, the rail 18 can be pulled towards the bracket 22, thus tightening the fibers 6.

An embodiment that tightens the fibers 6 as well as keeping them pressed close together and against the top 14 of the filter body 16, is seen in Figure 3. Here the surface 14 of the filter body 16 is convex and the fibers 6 of the filter layer, fixedly attached at one end to a bracket 32, are tightened by the arrangement explained above in connection with Figure 2. It is clearly seen that, due to the convexity of the top surface 14 of the filter body 16, tightening the fibers will also cause them to be pressed one against the other.

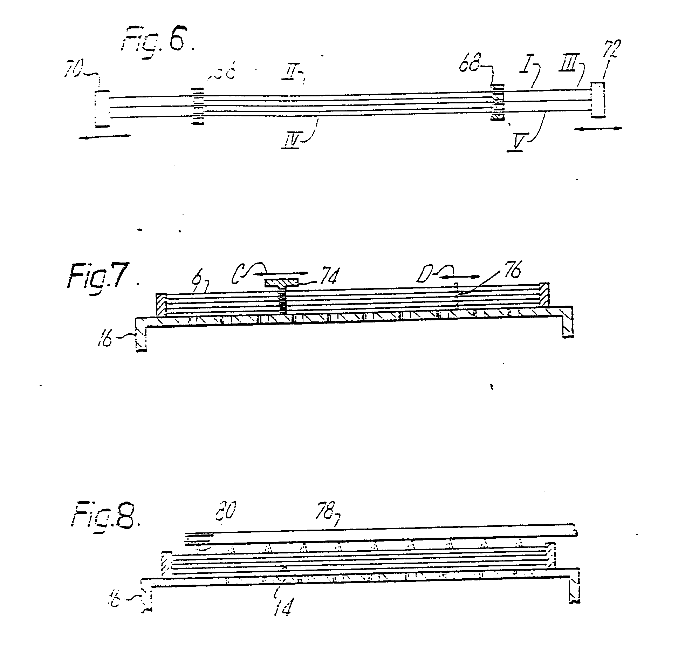

The embodiment shown in Figures 4 and 5, the filter element of which comprises a flat layer of fibers 6 stretched between two rails 52 and 54, facilitates washing (described later) by inducing the fibers 6 in differing strata of the filter layer to perform a distinct reciprocating movement relative to fibers in other strata. To this end, the rails 52 and 54 are arranged to swivel about the axes 56 and 58, respectively. In the horizontal plane, these axes lie in a plane passing through the center of the filter-layer thickness. For instance, if the thickness of the layer is made up of 5 strata, this plane would pass through the third stratum. In the vertical plane, the axes pass through the plane of attachment of the fibers 6 to the rails 52, 54. A swivelling movement of the rails 52, 54 about the axes 56, 58 respectively would thus turn the rectangular cross-section of the filter layer as seen in Figures 4 and 5 into a rhomboid cross-section, as indicated by broken lines in Figure 5. Such deformation entails a relative sliding movement of the different strata, which will tend to loosen sticky solids. The swivel movement required to produce the above effect is obtained, e.g. by an eccentric 60 acting on an arm 62 fixedly attached to the rail 52, against the restoring force of a compression spring 64. The eccentric 60 may be set rotating by a small turbine wheel driven by the mains water.

In a variant of the embodiment of Figure 4 represented in Figure 6, a reciprocating movement of a larger amplitude is obtained by providing two fixed fiber rails 66 and 68, to which are fixedly attached all fibers of strata II and IV, while the fibers of strata I, III and V pass freely through rails 66 and 68, and are fixedly attached to rails 70 and 72. The relative fiber movement is obtained by keeping the rails 66 and 68 stationary, while imparting a reciprocating, in-phase movement to rails 70 and 72. Mechanisms for this purpose are numerous and well-known and are therefore neither explained nor drawn.

Figure 7 illustrates another auxiliary cleaning method. Here, the filter fibers 6 are threaded through a comb-like member 74, to which, for purposes of cleaning, is imparted a reciprocating motion as indicated by the double arrow C, thereby mechanically scraping off the dirt deposited on the fibers 6. The dirt is then easily removed by washing. A similar mechanical scraping effect can be obtained by a number of stretched fibers 76 arranged in a vertical plane including with the filter fibers an angle of about 90°, each scraping fiber passing between two adjacent strata of the filter fibers 6. When this fiber "comb" is passed from one end of the fiber layer to the other (double arrow D), dirt particles are scraped off.

Washing of the above described filter elements is by application of fluid jets against the filter layer. One example of a system for doing this is shown in Figure 8, wherein a tube 78 is arranged in proximity to the filter layer so that in the cleaning mode of the filter operation, a number of jets 80 issue from the tube to impact on the layer, spread it apart locally, and flush out the dirt. To cover the entire filter surface, there must be either a sufficient number of tubes 78, or a relative motion must be introduced between the tube 78 and its jets 80, and the filter surface. The source of the washing fluid is advantageously, though not necessarily, the filtered fluid.

As shown in Figure 8, the jets 80 impact the filter layer in a direction substantially perpendicular to its surface and press the fibers against the rigid surface 14 of the filter body 16.

For disposing of particularly clinging filter deposits, the jet action of the washing system of Figure 8 and the mechanical agitation produced by the arrangement of Figure 4, 6 or 7 is particularly effective.

While the fibers of the filter elements according to the invention can be made of any material compatible with the fluid to be filtered, optimum results were obtained for example with twisted synthetic fibers. It has been found that the surface texture imparted to the thread by the twisting operation provided just the right order of magnitude of interstitial space permitting the fluid to pass without excessive pressure loss, while retaining all solids down to the smallest size which still needs to be filtered out. It is of course also possible to use a single, untwisted fiber having a texturized surface.

To prevent formation of stagnation zones in the filter layer, it has been found advantageous to provide the top surface of the filter body with a relatively rough texture. This will permit the fluid to get beneath the lowermost fibers of the fiber layer also at regions between any two perforations.

While in the aforegoing the filter deposits were explicitly or implicitly called solids, this is not necessarily so. With liquids to be filtered, these deposits could well be viscous, or with gases—liquid.

## Claims

1. A filter element for filtering a fluid, comprising at least one body member (16) having openings providing access and egress for said fluid, said access opening(s) being constituted by one or more perforations in at least one major wall element (14) of the body member, a filter medium in the form of a plurality of fibers (6) located on the body member over said wall element, the fibers having an active length and being oriented substantially uniformly in a given direction over at least a portion of their active length, along which portion at least, each of the fibers is disposed in close proximity to its adjacent fibers to form a filter layer, and means for directing fluid onto at least a portion of the active length of the fibers for cleaning the fibers, characterised in that the filter layer constituted by the plurality of fibers (6) is substantially flat, that the fibers are maintained in a taut condition, and that the cleaning fluid directing means comprises means (78) for directing at least one fluid jet (80) onto the fibers (6) in a direction intersecting the plane of the layer and towards the wall element so that said at least one fluid jet impacts the filter layer and presses it against the surface of the wall element.

2. A filter element as claimed in claim 1, characterised in that the body member (16) has a substantially rectangular cross-section.

3. A filter element as claimed in claim 1 or claim 2, characterised in that the wall element (14) provided with perforations is convexly curved.

4. A filter element as claimed in any one of claims 1 to 3, characterised in that the filter medium consists of a plurality of filter fibers (6) arranged in a plurality of strata (I—V).

5. A filter element as claimed in any one of claims 1 to 4, characterised in that there are further provided loosening means (52—64; 66—72; 74; 76) for facilitating the removal of filtered-out solid matter from the filter layer fibers (6) by said fluid jet means (78).

6. A filter element as claimed in claim 5, wherein said loosening means is a reciprocally sliding comb-like member (74).

7. A filter element as claimed in claim 5 when dependent on claim 4, wherein said loosening means (52—64; 66—72) is arranged to cause the fibers (6) of at least one stratum (I, III, V) to perform a reciprocating movement relative to the fibers (6) of at least one adjacent stratum (II, IV).

8. A filter device for filtering fluids, having at least one filter element as claimed in any one of the preceding claims.

## Patentansprüche

1. Filterelement zur Filtration eines Fluids, welches Filterelement mindestens einen Grundkörper (16) aufweist, der Öffnungen für den Zufluß und Ausfluß des genannten Fluids besitzt, wobei die Zuflußöffnung(en) durch ein Loch oder durch mehrere Löcher in mindestens einem der größeren Wandelemente (14) des Grundkörpers gebildet sind, weiter ein Filtermedium aufweist, in Form einer Vielzahl von Fasern (6), welche am Grundkörper über diesem Wandelement angeordnet sind, welche Fasern eine wirksame Länge haben und im wesentlichen gleichförmig in einer gegebenen Richtung über mindestens einen Teil ihrer wirksamen Länge ausgerichtet sind, wobei mindestens längs dieses Teiles jede der Fasern in unmittelbarer Nähe zu den ihr benachbarten Fasern angeordnet ist um eine Filterlage zu bilden, und weiter Mittel aufweist, um ein Fluid auf mindestens einen Teil der aktiven Länge der Fasern zu richten, um die Fasern zu reinigen, dadurch gekennzeichnet, daß die Filterlage, welche durch eine Vielzahl von Fasern (6) gebildet ist, im wesentlichen flach ist, daß die Fasern in einem gespannten Zustand gehalten sind, und daß das Reinigungsfluid-Richtmittel Mittel (78) aufweist um mindestens einen Fluidstrahl (80) auf die Fasern (6) in einer Richtung zu lenken, welche die Ebene der Lage schneidet und zum Wandelement verläuft, so daß dieser mindestens eine Fluidstrahl auf die Filterlage prallt und diese gegen die Oberfläche des Wandelementes preßt.

2. Filterelement nach Anspruch 1, dadurch gekennzeichnet, daß der Grundkörper (16) einen im wesentlichen rechteckigen Querschnitt hat.

3. Filterelement nach Anspruch 1 oder 2, dadurch gekennzeichnet, daß das mit Löchern versehene Wandelement (14) konvex gekrümmt ist.

4. Filterelement nach einem der Ansprüche 1 bis 3, dadurch gekennzeichnet, daß das Filtermedium aus einer Vielzahl von Filterfasern (6) besteht, welche in einer Mehrzahl von dünnen Lagen (I—V) angeordnet sind.

5. Filterelement nach einem der Ansprüche 1 bis 4, dadurch gekennzeichnet, daß weiter Lösemittel (52—64; 66—72; 74; 76) zum Erleichtern des Entfernens von ausgefilterten Feststoffen aus den Filterlagenfasern (6) durch die genannten Fluidstrahlmittel (78) vorgesehen sind.

6. Filterelement nach Anspruch 5, dadurch gekennzeichnet, daß das Lösemittel ein hin- und hergehend verschiebbares kammartiges Glied (74) ist.

7. Filterelement nach Anspruch 5 bei Rückbeziehung desselben auf Anspruch 4, dadurch gekennzeichnet, daß das Lösemittel (52—64; 66—72) zum Herbeiführen einer hin- und hergehenden Bewegung der Fasern (6) von mindestens einer Lage (I, III, V) in bezug auf die Fasern (6) von mindestens einer benachbarten Lage (II, IV) angeordnet sind.

8. Filtereinrichtung zur Filtration von Fluiden, dadurch gekennzeichnet, daß diese Einrichtung mindestens ein Filterelement nach einem der vorhergehenden Ansprüche aufweist.

**Revendications**

1. Elément filtrant pour la filtration d'un fluide, comprenant au moins un élément de corps (16) présentant des ouvertures assurant un accès et une sortie pour ce fluide, cette ou ces ouvertures d'accès étant constituées par une ou plusieurs perforations prévues dans au moins un élément de paroi principal (14) de l'élément de corps, un milieu filtrant se présentant sous la forme d'une série de fibres (6) localisées sur l'élément de corps par-dessus l'élément de paroi susdit, ces fibres ayant une longueur active et étant orientées essentiellement de façon uniforme dans une direction donnée sur au moins une partie de leur longueur active, partie suivant laquelle au moins, chacune des fibres est disposée à proximité étroite des fibres adjacentes pour former une couche filtrante, et und dispositif pour diriger un fluide sur au moins une partie de la longueur active des fibres en vue du nettoyage de celles-ci, caractérisé en ce que la couche filtrante constituée par la série des fibres (6) est essentiellement plane, en ce que les fibres sont maintenues dans un état tendu, et en ce que le dispositif dirigeant le fluide de nettoyage comprend un dispositif (78) destiné à diriger au moins un jet de fluide (80) sur les fibres (6) dans une direction recoupant le plan de la couche et orientée vers l'élément de paroi de manière que le ou les jets de fluide heurtent la couche filtrante et la pressent contre la surface de l'élément de paroi.

2. Elément filtrant suivant la revendication 1, caractérisé en ce que l'élément de corps (16) a une section transversale essentiellement rectangulaire.

3. Elément filtrant suivant la revendication 1 ou la revendication 2, caractérisé en ce que l'élément de paroi (14) comportant des perforations est d'une courbure convexe.

4. Elément filtrant suivant l'une quelconque des revendications 1 à 3, caractérisé en ce que le milieu filtrant consiste en une série de fibres de filtration (6) agencées suivant une série de sous-couches ou strates (I—V).

5. Elément filtrant suivant l'une quelconque des revendications 1 à 4, caractérisé en ce qu'il comporte en outre des moyens de dégagement (52—64; 66—72; 74; 76) pour faciliter l'enlèvement des matières solides séparées par filtration, depuis les fibres (6) de la couche filtrante grâce au dispositif susdit (78) à jet de fluide.

6. Elément filtrant suivant la revendication 5, caractérisé en ce que les moyens susdits de dégagement sont constitués par un élément en forme de peigne (74) pouvant se déplacer en va-et-vient.

7. Elément filtrant suivant la revendication 5, en tant que dépendante de la revendication 4, caractérisé en ce que les moyens susdits de dégagement (52—64; 66—72) sont agencés pour amener les fibres (6) d'au moins une sous-couche (I, III, V) à subir un mouvement de va-et-vient par rapport aux fibres (6) d'au moins une sous-couche adjacente (II), IV).

8. Dispositif filtrant pour la filtration de fluides, caractérisé en ce qu'il comporte au moins un élément filtrant suivant l'une quelconque des revendications précédentes.

Fig. I.

Fig. 2.

Fig. 3.

Fig. 4.

Fig. 5.

1

Fig. 6.

70    66    II    68    I    III    72

IV    V

Fig. 7.    6    C    74    D    76

16

Fig. 8.    20    78

16    14